# EUROPEAN PATENT SPECIFICATION

(11) **EP 1 373 139 B1**
(45) Date of publication and mention of the grant of the patent: **24.08.2011**
(21) Application number: 01995087.2
(22) Date of filing: 29.10.2001
(51) Int. Cl.: C01B 33/187

(54) **EXTRACTION OF SILICA AND MAGNESIUM COMPOUNDS FROM OLIVINE**
EXTRAKTION VON SILICIUMOXID UND MAGNESIUMVERBINDUNGEN AUS OLIVIN
EXTRACTION DE COMPOSES DE SILICE ET DE MAGNESIUM A PARTIR D'OLIVINE

(30) Priority: 02.11.2000 NO 20005521
(43) Date of publication of application: 02.01.2004
(73) Proprietor: Silica Tech ANS, 1313 Voyenenga (NO)
(72) Inventor: HANSEN, Tord, N-1395 Hvalstad (NO); ZANDER, Bo, 71177 Strossa (SE)
(74) Representative: Bergentall, Annika Maria
(86) International application number: PCT/NO2001/000428
(87) International publication number: WO 2002/048036

(56) References cited:
- US-A- 5 780 005

## Description

The present invention relates to a method for extraction of silica (SiO2) and magnesium compounds (MgCO3, MgO, Mg(OH)2, MgSO4, MgC12) from the mineral olivine (Mg2SiO4) by chemical and thermal tratment.

The use of precipitated silica within filler markets, including plastic, paint, sealant and the rubber tire industry, has during the last ten years increased considerably. The total consumption of precipitated silica in world market extends 1 million tons per year. And a continuing increase of consumption within the filler markets will result in a need of increased production capacity.

Concerning magnesium compounds is the refractory industry dominating consuming 65% of the total demand. Other important markets are the chemical industry, the water treatment sector and the use within different environmental areas: The total consumption of magnesium compounds is approx. 10 million tons of MgO per year. The magnesium metal industry is hereby only a modest consumer, with a demand of approx. 500.000 tons per year. The raw materials used for production of magnesium compounds are mainly magnesite (MgCO3) counting for approx. 80% of the raw materials in use.

The main consumption of precipitated silica in the world market is covered through complex production processes involving high investment and operating costs, resulting in a high cost product.

MgO in the refractory industry is mainly considered as a commodity product market where prices are based on offer and demand.

As possible interferings, the following patent documents have been examined :
(1) NO 177137 ( corresponding to " US Patent No 5,780,005 ")
(2) NO 143583
(3) NO 160200
(4) AT 352684
(5) JP 60161320

Examining the above listed patent documents, the methods described shows that the olivine minerals are leached in aqueous solutions of mineral acids in acid baths, involving that the dissolving process of the olivine mineral and the formation of silica takes place in an acid bath at a maximum temperature of 110°C. These methods result in the formation of a silica-gel, where a small part of solids binds a large volume of liquid. A main problem combined with a use of the known technology is the formation of silica-gel, which restricts or excludes efficient filtering and thereby excludes a practical use of technology.

The present invention is described by mixing ground olivine sand with concentrated sulphuric acid at a weight ratio olivine/sulphuric acid of 1-0.3, to a slurry, which by thermal treatment is heated to temperatures between 150°C - 400°C, ideally 250°C, over a period of time ranging between 3-12 hours, ideally 7-8 hours. This treatment may more precisely be characterized as a sulphating process. Combined with the thermal treatment, the mixture forms a dry aggregate product, which then is dissolved (leached) in water. It is hereby achieved to precipitate silica solids spontaneous without gel formation, where the rest solution consists of aqueous magnesium sulphate.

As described is the present invention of significant difference from other known technologies, first by the present treatment method which more precise is characterized as sulphating and where known technologies are presented as acid leaching, and second that the temperatures involved in the present sulphating process demands significant higher degrees compared with the known leaching methods. It is also of significance that the silica end product in the present invention results in the formation of a non gel silica, while the known methods results in silica gel formation which restricts a practical use of the methods. The examined patent documents are therefor not considered to be of relevant interference to the present invention.

The present invention concerns manufacturing of silica and magnesium compounds based on ground olivine , where the mineral olivine ideally is recommended to contain 48-50% MgO. The invention relates to a method for manufacturing silica(SiO2) and magnesium compounds (MgO, MgC03, Mg(OH)2, MgSO4, MgCl2), based on the mineral olivine ((Fe,Mg)2SiO4), characterized wherein olivine is mixed with concentrated sulphuric acid at a weight ratio olivine/sulphuric acid of 1 - 0.3 and by heating the mixture between 150°C - 400°C, giving the mixture a reaction time between 3-12 hours, and thereafter dissolve (leach) the mixture in water, whereby silica precipitatites to a solid and then is removed from the solution by filtration, where the filtrate containing dissolved magnesium is further processed to magnesium compounds, and where the silica filter product is further washed with a weak solution of soda (NaCO3) or sodium hydroxide (NaOH) and thereafter eventually further washing of the silica with a weak aqueous solution of an acid or a mixture of acids, in order to obtain a pure silica (solid) which is filtered out as a silica product.

It is hereby achieved to manufacture a silica product with significant identical characteristics compared to precipitated silica, through a relative simple process at a relative low cost.

After filtering out the silica solids, the rest solution is treated seperately, which more specified is described by a first step neutralization of excess acid with ground limestone (CaCO3), until a weak sour or neutral solution is obtained, whereby precipitated gypsum (CaSO4) is filtered out. The rest solution is then treated by "solvent extraction" process (Elkem method) whereby iron (Fe) is removed from the solution. The rest solution is then blown through with CO2 gas whereby MgC03 is precipitated and filtered out (Pattison method). MgCO3 may then be transfered to calcination for manufacturing of MgO. The filtrate may then be transfered to a waste treatment plant eventually to a seperate plant for manufacturing of nickel and chromium compounds.

### Example

The starting material used was olivine sand AFS 120 (49-50% MgO) which was ground down to 70% minus 0.044mm in a ball mill. The material had the following chemical analysis:

| | |
|---|---|
| SiO2 | 41.5-42.5% |
| Fe203 | 6.8-7.3% |
| Cr203 | 0.2-0.3% |
| Al2O3 | 0.4-0.5% |
| NiO | 0.3-0.35% |
| MnO | 0.05-0.1% |
| CaO | 0.05-0.1% |
| MgO | 49.0-50.0% |

The ground olivine sand was mixed with concentrated sulphuric acid (H2SO4) at a weight ratio olivine/sulphuric acid of 0.5 and heated to 250°C . The mixture was given a reaction time of 8 hours at a constant heat of 250°C. The sulphated mixture was then dissolved in water (approx. at 12 weight % solids) during a stirring period of 30 minutes. The solid silica product was thereafter filtered out, while the filtrate was stored in a separate container. The solid silica product was then mixed with a 5% soda solution at a weight of 12%. The purified silica product was thereafter filtered out while the rest solution was stored in a waste material container. The purified silica was then mixed with water (12% solids by weight) during a stirring period of 30 minutes as the last cleaning step. The purified silica was thereafter filtered off and dried. The rest solution was stored in a separate waste container. The dried silica product had the following analysis.

| | |
|---|---|
| SiO2 | 96% |
| MgO | 3.50% |
| | |
| BET | 100 kv.m/g |

The analysis shows that the silica product obtained can be identified and classified as precipitated silica. An additonal cleaning step of the silica could involve further washing with a weak solution of a 1 - 2% HCL + HF, in order to dissolve excess impurities.
The rest solution from the first leaching step with water, which after filtering out the silica, leaves a solution containing mainly dissolved magnesium in addition to minor part of dissolved iron, chromium, nickel and aluminium together with excess sulphuric acid from the main reaction, is first neuteralized with lime. Precipitated gypsum is filtered out, whereafter iron is extracted from the filtrate by the Elkem method. The filtrate then containing mainly dissolved magnesium and minor parts of nickel, chromium and aluminium is treated with carbon dioxide gas, resulting in formation of dissolved magnesium-bicarbonat (Mg(HCO3)2. Heating of the magnesium-bicarbonate solution, leads to formation of magnesium carbonate solids (Pattison method), which is filtered out and dried. The described process illustrates how production of synthetic magnesite (MgCO3) takes place, which corresponds to the main material source for magnesium compounds.

## Claims

1. A method for manufacturing of silica (SiO2) and magnesium compounds (MgO, MgC03, Mg(OH)2, MgSO4, MgCl2), based on the mineral olivine ((Fe,Mg)2SiO4), ***characterized*** wherein olivine is mixed with concentrated sulphuric acid at a weight ratio olivine/sulphuric acid of 1 - 0.3 , and by heating the mixture between 150°C - 400°C, and giving the mixture a reaction time between 3-12 hours, and thereafter dissolve (leach) the mixture in water, whereby silica precipitates to a solid and then is removed from the solution by filtration, where the filtrate containing dissolved magnesium is further processed to magnesium compounds, and where the silica filter product is further washed in a weak solution of soda (NaCO3) or sodium hydroxide (NaOH) and thereafter eventually is further washed with a weak solution of an acid or a mixture of acids, in order to obtain a pure silica product.

2. The method of claim 1, ***characterized*** wherein the weight ratio olivine/sulphuric acid is between 0.5-0.67, and by heating the mixture up to 250°C, giving the mixture a reaction time of approx. 8 hours.

3. The method of claim 1, ***characterized*** wherein the filtered silica is purified by washing with a weak solution of hydrofluoric acid, eventually in a mixture with another mineral acid, as hydrochloric acid.

4. The method of claim 1, ***characterized*** wherein the filtered silica in one or more purification steps is treated with water dissolved peroxides, chlorates and ammonia.

## Patentansprüche

1. Verfahren zur Herstellung von Silica (SiO₂) und Magnesiumverbindungen (MgO, MgCO₃, Mg(OH)₂, MgSO₄, MgCl₂), basierend auf dem Mineral Olivin ((Fe,Mg)₂SiO₄), **dadurch gekennzeichnet, dass** Olivin mit konzentrierter Schwefelsäure in einem Olivin/Schwefelsäure-Gewichtsverhältnis von 1 bis 0,3 gemischt wird und die Mischung auf zwischen 150 und 400°C erhitzt wird und der Mischung eine Reaktionszeit zwischen 3 und 12 Stunden gegeben wird und danach die Mischung in Wasser gelöst (ausgewaschen) wird, wobei Silica zu einem Feststoff ausfällt und dann von der Lösung durch Filtration entfernt wird, wobei das Filtrat, das gelöstes Magnesium enthält, ferner zu Magnesiumverbindungen verarbeitet wird, und wobei das Silica-Filterprodukt ferner in einer schwachen Lösung aus Soda (NaCO₃) oder Natriumhydroxid (NaOH) gewaschen wird und danach schliesslich ferner mit einer schwachen Lösung aus einer Säure oder einer Mischung aus Säuren gewaschen wird, um ein reines Silicaprodukt zu erhalten.

2. Verfahren gemäss Anspruch 1, **dadurch gekennzeichnet, dass** das Olivin/Schwefelsäure-Gewichtsverhältnis zwischen 0,5 und 0,67 liegt und dass die Mischung auf 250°C erhitzt wird, wobei der Mischung eine Reaktionszeit von etwa 8 Stunden gegeben wird.

3. Verfahren gemäss Anspruch 1, **dadurch gekennzeichnet, dass** das filtrierte Silica durch Waschen mit einer schwachen Lösung aus Fluorwasserstoffsäure schliesslich in einer Mischung mit einer anderen Mineralsäure, wie Salzsäure, gereinigt wird.

4. Verfahren gemäss Anspruch 1, **dadurch gekennzeichnet, dass** das filtrierte Silica in einem oder mehreren Reinigungsschritten mit in Wasser gelösten Peroxiden, Chloraten oder Ammoniak behandelt wird.

## Revendications

1. Procédé pour la production de silice (SiO₂) et de composés de magnésium (MgO, MgCO₃, Mg(OH)₂, MgSO₄, MgCl₂), à base d'olivine minérale ((Fe,Mg)₂SiO₄), **caractérisé en ce que** de l'olivine est mélangée à de l'acide sulfurique concentré en un rapport pondéral olivine/acide sulfurique de 1-0,3, et en chauffant le mélange à une température comprise entre 150°C à 400°C, et en soumettant le mélange à un temps de réaction de 3 à 12 heures, puis le mélange est dissous (lessivé) dans de l'eau, ce qui fait que la silice précipite en une substance solide et est ensuite séparée de la solution par filtration, le filtrat contenant le magnésium dissous est soumis à un transformation supplémentaire en composés de magnésium, et le produit consistant en silice sur le filtre est en outre lavé dans une solution faible de carbonate de sodium (NaCO₃) ou d'hydroxyde de sodium (NaOH) et est ensuite finalement lavé à nouveau avec une solution faible d'un acide ou d'un mélange d'acides, afin d'obtenir un produit consistant en silice pure.

2. Procédé suivant la revendication 1, **caractérisé en ce que** le rapport pondéral olivine/acide sulfurique est compris entre 0,5 et 0,67 et le mélange est chauffé jusqu'à une température de 250°C, le mélange étant soumis à un temps de réaction d'approximativement 8 heures.

3. Procédé suivant la revendication 1, **caractérisé en ce que** la silice filtrée est purifiée par lavage avec une solution faible d'acide fluorhydrique, éventuellement en mélange avec un autre acide minéral tel que l'acide chlorhydrique.

4. Procédé suivant la revendication 1, **caractérisé en ce que** la silice filtrée dans une ou plusieurs étapes de purification est traitée avec des peroxydes, des chlorates et de l'ammoniac dissous dans de l'eau.
